# DEMANDE DE BREVET EUROPEEN

(11) **EP 2 107 351 A1**
(43) Date de publication de la demande: **07.10.2009**
(21) Numéro de dépôt: 08305078.1
(22) Date de dépôt: 02.04.2008
(51) Int. Cl.: G01F 15/06, E06B 9/32, G01D 4/00

(54) **Dispositif de télérelevé pour compteur**

(71) Demandeur: Actaris SAS, 92100 Boulogne Billancourt (FR)
(72) Inventeur: Guillot-Jerome, Denis, 01310 Buellas (FR); Droin, Frédéric, 69400 Liergues (FR); Bouzid, Tarek, 71000 Macon (FR)
(74) Mandataire: Lenne, Laurence

(57) **Abrégé**

L'invention concerne un dispositif de télérelevé (3) destiné au relevé à distance de la consommation d'un compteur et comprenant une paroi frontale et une paroi latérale.

Selon l'invention, le dispositif comprend un capot de protection du rayonnement solaire (4), disposé sur le dit dispositif de télérelevé et comportant au moins une paroi de recouvrement (4A) de ladite paroi frontale.

Ce dispositif peut être un module de télérelevé (3) installé sur un compteur ou un relais de télétransmission (10).

## Description

L'invention concerne un dispositif de télérelevé pour compteur.

Les compteurs sont actuellement souvent associés à un module de télérelevé, qui est destiné au relevé à distance de la consommation et qui est installé sur des compteurs déjà installés. Pour ce faire, il peut être prévu une cavité d'encastrement ménagée sur la face supérieure du capot du totalisateur et dans laquelle est disposé précisément le module, afin d'assurer un positionnement précis de l'agencement de lecture du module par rapport à un agencement interne au totalisateur et assurant la détection de la consommation, par exemple le disque indicateur. Cette détection peut être effectuée de façon optique, capacitive, inductive ou autre, par exemple en scrutant le déplacement du disque indicateur.

La télétransmission des données peut par ailleurs être effectuée au moyen de relais disposés entre le compteur et le poste de contrôle.

Les compteurs ainsi que les relais peuvent être installée en extérieur et être exposés au rayonnement du soleil.

Ces dispositifs de télérelevé, modules et relais, contiennent à l'intérieur d'un boîtier un certain nombre de composants électroniques alimentés par une ou des batteries et dont le fonctionnement peut être perturbé par la température et leur durée de vie être réduite.

L'invention propose de résoudre ce problème technique en équipant de tels dispositifs de télérelevé d'un capot de protection.

Elle concerne donc un dispositif de télérelevé destiné au relevé à distance de la consommation d'un compteur et comprenant une paroi frontale et une paroi latérale, caractérisé en ce qu'il comprend un capot de protection du rayonnement solaire, disposé sur le dit dispositif de télérelevé et comportant au moins une paroi de recouvrement de ladite paroi frontale.

L'invention permet d'augmenter la durée de vie des dispositifs de télérelevé exposés au soleil.

Elle permet également d'utiliser des composants standards, essentiellement des composants électroniques et des batteries standards, pour constituer le dispositif de télérelevé, et de ne pas nécessiter de composants résistants aux hautes températures.

Selon un mode de réalisation préféré, ledit capot comporte des moyens de circulation d'air entre ledit dispositif de télérelevé et ledit capot.

Ladite circulation d'air est avantageusement naturelle.

Ledit capot comporte de préférence des orifices dans ladite paroi de recouvrement.

Ces ouvertures peuvent par exemple être des fentes.

Ces ouvertures assurent une coupure des rayons lumineux du soleil et placent le module à l'ombre tout en permettant une circulation d'air.

De préférence, ledit capot comporte également un rebord périphérique qui peut recouvrir au moins partiellement la paroi latérale dudit dispositif de télérelevé.

Cette paroi de recouvrement et ledit rebord sont avantageusement espacés de ladite paroi frontale et de ladite paroi latérale du dispositif de télérelevé, le capot étant disposé sur le dispositif.

Ledit rebord périphérique peut en variante coopérer avec une bride périphérique dirigée vers l'extérieur, portée par le dispositif, le capot étant disposé sur le dispositif.

Ledit capot peut être solidaire du dispositif de télérelevé.

Cette solidarisation peut être effectuée sur le terrain sur le compteur déjà monté et équipé d'un module ou sur un relais ou être effectuée sur le module ou relais en usine.

Ledit capot est de préférence clippé sur le dispositif de télérelevé.

Ledit capot peut être articulé sur le dispositif de télérelevé, de façon à pouvoir être soulevé.

L'invention concerne également un module de télérelevé installé sur un compteur tel que précisé ci-dessus.

L'invention concerne enfin un relais de télétransmission tel que précisé ci-dessus.

L'invention est décrite ci-après plus en détail à l'aide de figures ne représentant que des modes de réalisation préférés de l'invention.

La figure 1 est une vue en perspective d'un compteur équipé d'un module de télérelevé d'un premier type.

La figure 2 est une vue en perspective d'un capot selon un premier mode de réalisation de l'invention.

La figure 3 est une vue en perspective de ce compteur équipé d'un module de télérelevé et d'un capot selon ce premier mode de réalisation de l'invention.

La figure 4 est une vue en coupe de ce compteur équipé d'un module de télérelevé et d'un capot selon ce premier mode de réalisation de l'invention.

Les figures 5A et 5B sont des vues en perspective d'un compteur équipé d'un module de télérelevé d'un second type et d'un capot selon un second mode de réalisation de l'invention.

Les figures 6A et 6B sont des vues en perspective de ce compteur équipé d'un module de télérelevé et d'un capot selon ce second mode de réalisation de l'invention, le capot étant soulevé.

La figure 7 est une vue en coupe de ce compteur équipé d'un module de télérelevé et d'un capot selon ce second mode de réalisation de l'invention.

La figure 8 est une vue en perspective d'un relais destiné au relevé à distance de la consommation d'un compteur.

La figure 9 est une vue en perspective d'un capot selon le premier mode de réalisation de l'invention.

La figure 10 est une vue en coupe de ce relais équipé d'un capot selon ce premier mode de réalisation de l'invention.

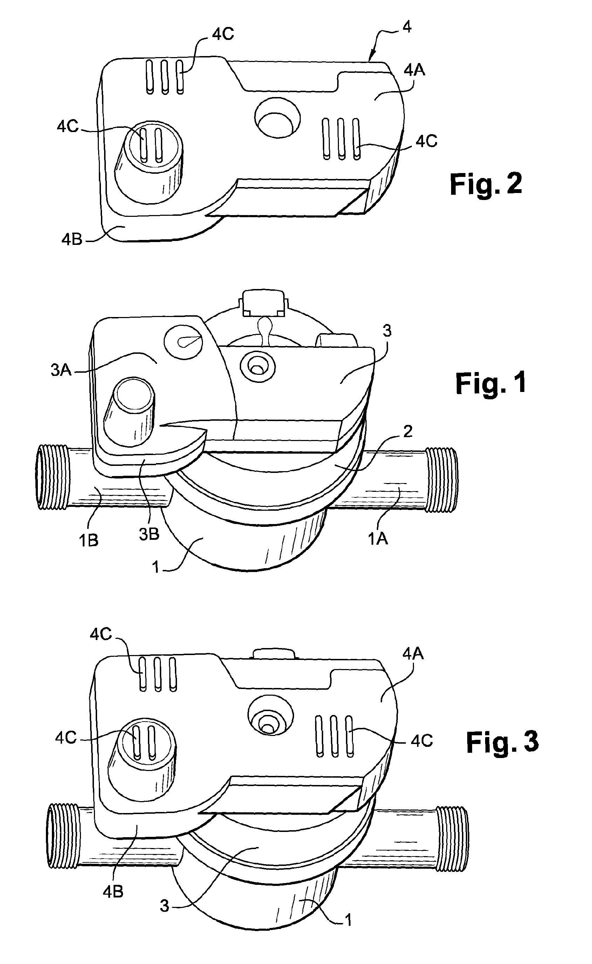

Les figures 1 à 4 représentent un premier mode de réalisation de l'invention.

Sur la figure 1 est représenté un compteur de fluide, plus précisément d'eau, comportant une bâche 1 pourvu d'un tronçon de conduite d'entrée 1A de l'eau et d'un tronçon de conduite de sortie 1B de l'eau et contenant une chambre de mesure, par exemple à turbine ou à piston oscillant, et un totalisateur 2 destiné au comptage de la consommation. Sur la face supérieure ou frontale de ce totalisateur est monté un module 3 de télérelevé, comprenant une paroi frontale 3A et une paroi latérale 3B et qui est destiné au relevé à distance de la consommation, par exemple par détection du déplacement du disque indicateur du totalisateur, de façon optique, capacitive, inductive ou autre.

Ce module ne recouvre la face supérieure du totalisateur 2 que partiellement et laisse visibles et lisibles des informations portées par la face supérieure du totalisateur 2, telles qu'un code barre de spécification et les données de consommation d'un afficheur.

L'invention concerne la protection de ce module 3.

Pour ce faire, est utilisé un capot de protection du rayonnement solaire 4 tel qu'illustré sur la figure 2.

Ce capot 4 est disposé sur le module 3 comme représenté sur la figure 3 et comporte une paroi de recouvrement 4A de la paroi frontale 3A du module et un rebord périphérique 4B recouvrant au moins partiellement la paroi latérale 3B du module.

Le capot comporte des fentes 4C dans sa paroi de recouvrement 4A qui constituent des moyens de circulation naturelle d'air entre le module de télérelevé 3 et le capot 4.

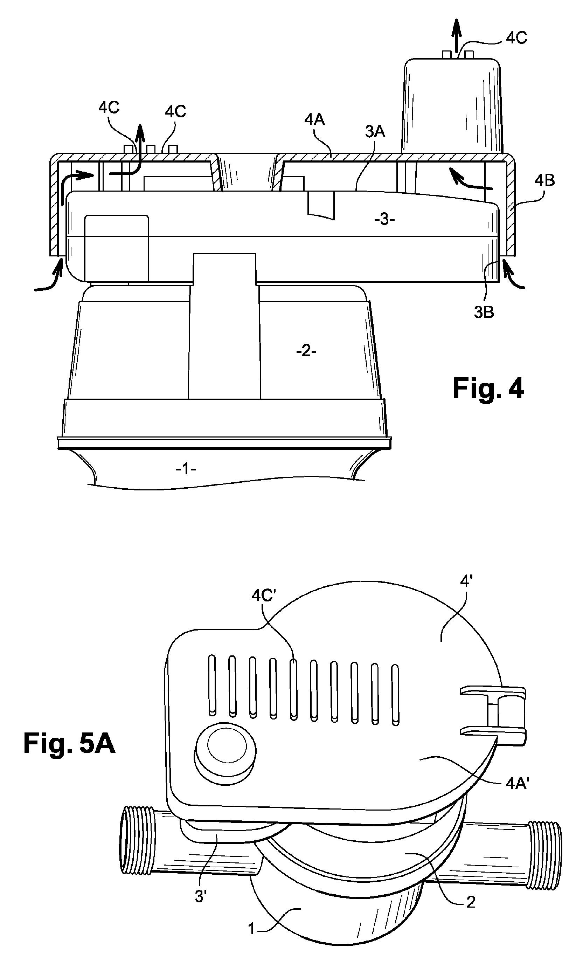

Cette circulation naturelle d'air est illustrée sur la figure 4 par des flèches.

Une fois le capot 4 monté sur le module 3, la paroi de recouvrement 4A et le rebord 4B du capot sont espacés de la paroi frontale 3A et de la paroi latérale 3B du module de télérelevé. C'est cet espace qui assure la circulation d'air, l'air entrant entre le rebord 4B du capot et la paroi latérale 3B du module de télérelevé et sortant par les fentes 4C présentes dans la paroi de recouvrement 4A du capot.

Selon ce mode de réalisation, le capot est solidaire du module de télérelevé 3. Il est de préférence clippé sur ce dernier, mais peut également être collé ou fixé à l'aide de vis sur ce dernier.

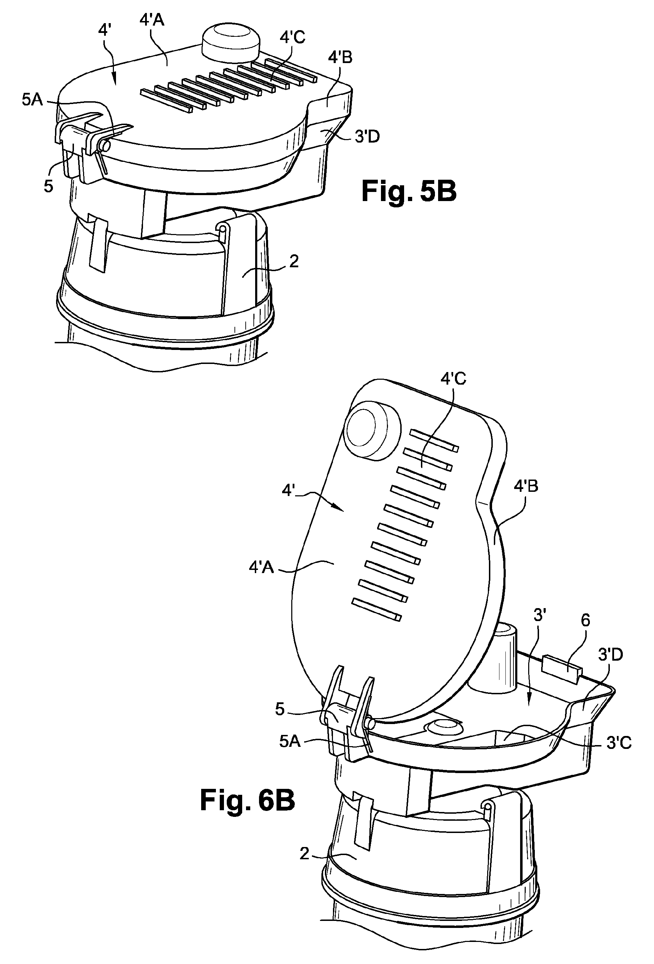

Les figures 5 à 7 représentent un second mode de réalisation de l'invention.

Sur ces figures est représenté un compteur de fluide, plus précisément d'eau, comportant une bâche 1 pourvu d'un tronçon de conduite d'entrée 1A de l'eau et d'un tronçon de conduite de sortie 1B de l'eau et contenant une chambre de mesure, par exemple à turbine ou à piston oscillant, et un totalisateur 2 destiné au comptage de la consommation. Sur la face supérieure de ce totalisateur est monté un module 3' de télérelevé, comprenant une paroi frontale 3'A et une paroi latérale 3'B et qui est destiné au relevé à distance de la consommation, par exemple par détection du déplacement du disque indicateur du totalisateur, de façon optique, capacitive, inductive ou autre.

L'invention concerne la protection de ce module 3' qui est d'un autre type que celui précédemment décrit. Ce module 3' en effet recouvre totalement la face supérieure ou frontale du totalisateur 2 et comporte des ouvertures 3'C par lesquelles peuvent être vues et lues des informations portées par la face supérieure du totalisateur 2, telles qu'un code barre de spécification et les données de consommation d'un afficheur.

Pour protéger ce module 3', est utilisé un capot de protection du rayonnement solaire 4'.

Ce capot 4' est disposé sur le module 3' et comporte une paroi de recouvrement 4'A de la paroi frontale 3'A du module et un rebord périphérique 4B' coopérant avec une bride périphérique 3'D dirigée vers l'extérieur, portée par le module 3'. Une fois fixé, le capot 4' forme donc avec cette bride 3'D une sorte de boîte vide au-dessus du module.

Le capot comporte des fentes 4'C dans sa paroi de recouvrement 4'A qui constituent des moyens de circulation naturelle d'air entre le module de télérelevé 3' et le capot 4'.

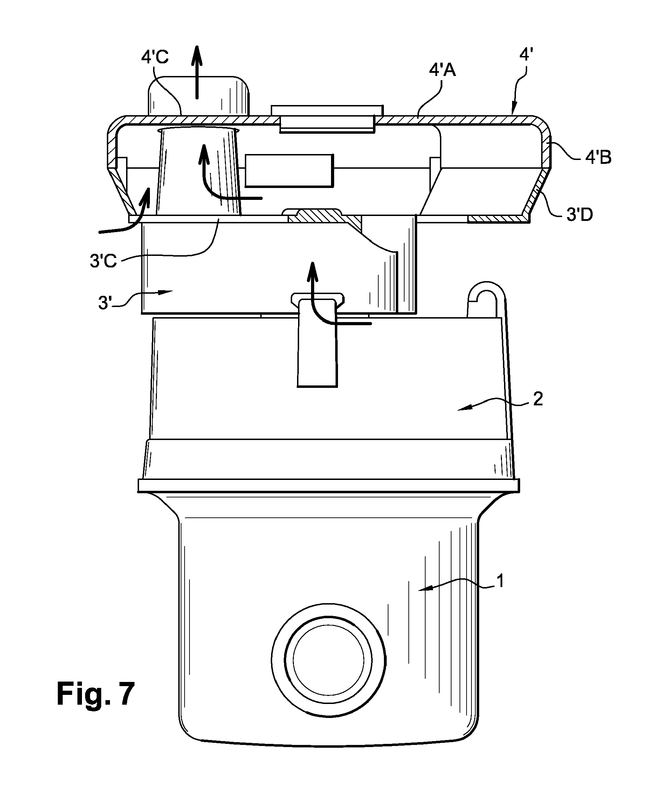

Cette circulation naturelle d'air est illustrée sur la figure 7 par des flèches.

Une fois le capot 4' monté sur le module 3', la paroi de recouvrement 4'A est donc espacée de la paroi frontale 3'A du module de télérelevé, suite à la collaboration par superposition de la bride 3'D et au rebord 4'D. C'est cet espace qui assure la circulation d'air, l'air entrant par les ouvertures 3'C du module de télérelevé et sortant par les fentes 4'C présentes dans la paroi de recouvrement 4'A du capot.

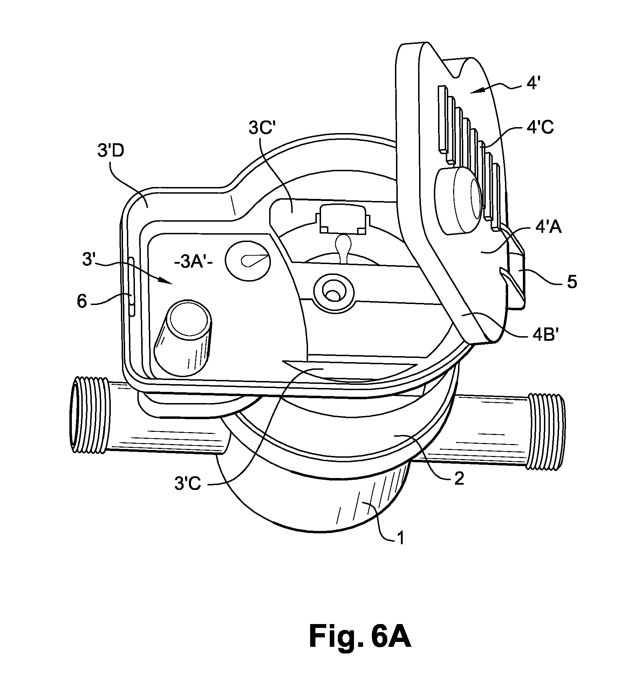

Selon ce mode de réalisation, le capot est articulé sur le module de télérelevé 3, de façon à pouvoir être soulevé, comme illustré sur les figures 6A et 6B.

Pour ce faire, comme particulièrement visible sur les figures 5B et 6B, le capot 3' est connecté à la bride périphérique 3'D du module par une charnière 5 comportant un ressort de rappel 5A en position active fermée sur le module. A l'opposé de cette charnière 5, est agencé sur cette bride périphérique 3'D un agencement de clippage 6 coopérant avec un agencement complémentaire porté par le rebord périphérique 4'B du capot, afin de maintenir le capot en position active fermée.

Une telle articulation du capot trouve particulièrement mais non exclusivement son application quand le module est du second type décrit, afin de permettre la vue et la lecture des informations portées par la face supérieure du totalisateur 2, telles qu'un code barre de spécification et les données de consommation d'un afficheur.

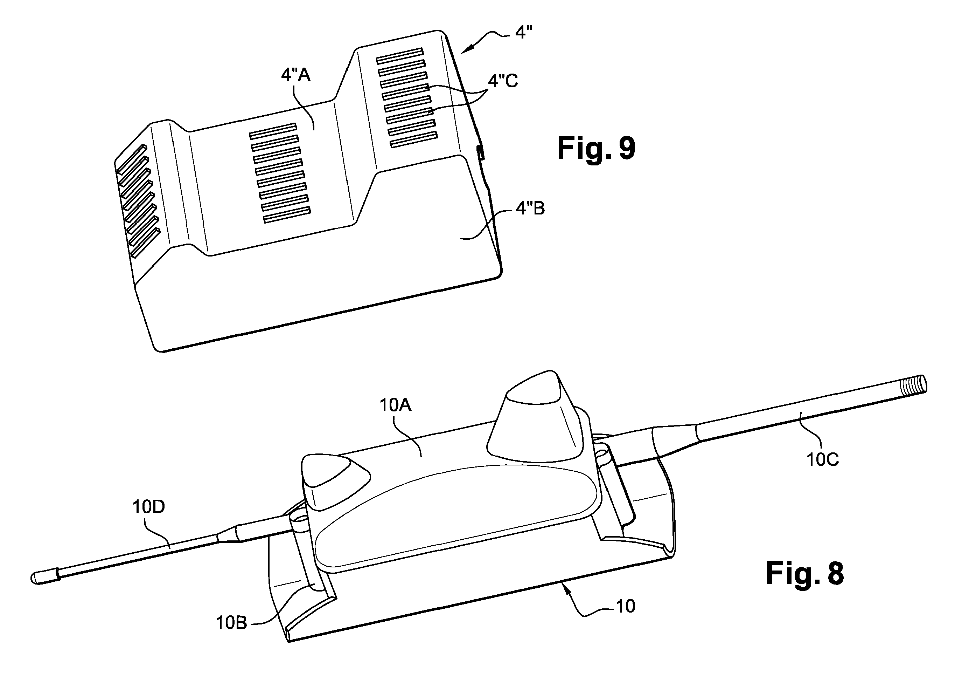

Sur la figure 8 est représenté un relais 10 destiné au relevé à distance de la consommation d'un compteur, afin d'assurer la télétransmission des données entre le compteur et le poste de contrôle. Ce relais est pourvu de deux antennes 10C, 10D.

L'invention concerne la protection de ce relais de télérelevé 10.

Pour ce faire, est utilisé un capot de protection du rayonnement solaire 4" tel qu'illustré sur la figure 9.

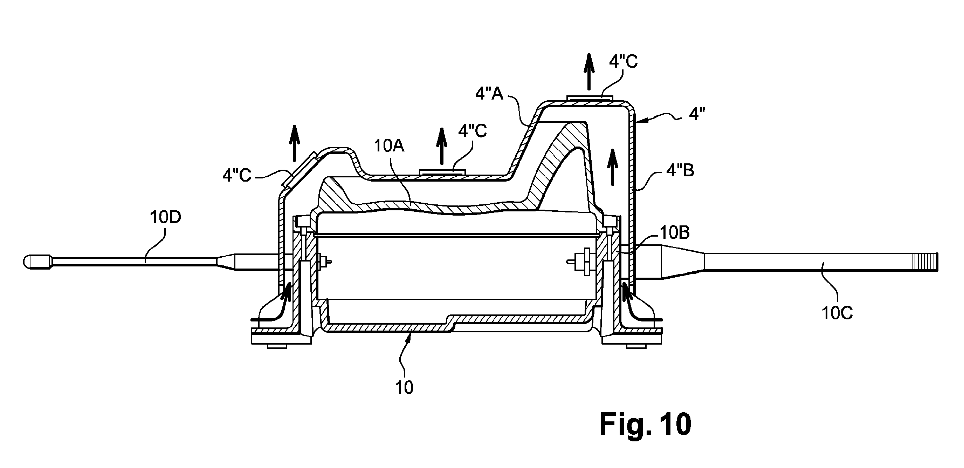

Ce capot 4" est disposé sur le relais 10 comme représenté sur la figure 10 et comporte une paroi de recouvrement 4"A de la paroi frontale 10A du relais et un rebord périphérique 4"B recouvrant au moins partiellement la paroi latérale 10B du module.

Le capot comporte des fentes 4"C dans sa paroi de recouvrement 4"A qui constituent des moyens de circulation naturelle d'air entre le relais 10 et le capot 4".

Cette circulation naturelle d'air est illustrée sur la figure 10 par des flèches.

Une fois le capot 4" monté sur le relais 10, la paroi de recouvrement 4"A et le rebord 4"B du capot sont espacés de la paroi frontale 10A et de la paroi latérale 10B du relais. C'est cet espace qui assure la circulation d'air, l'air entrant entre le rebord 4"B du capot et la paroi latérale 10B du relais et sortant par les fentes 4"C présentes dans la paroi de recouvrement 4"A du capot.

Selon ce mode de réalisation, le capot est solidaire du relais de télérelevé 10. Il est de préférence clippé sur ce dernier, mais peut également être collé ou fixé à l'aide de vis sur ce dernier.

## Revendications

1. Dispositif de télérelevé (3, 3', 10) destiné au relevé à distance de la consommation d'un compteur et comprenant une paroi frontale (3A, 3'A, 10A) et une paroi latérale (3B, 3'B, 10B), **caractérisé en ce qu'**il comprend un capot de protection du rayonnement solaire (4, 4', 4"), disposé sur le dit dispositif de télérelevé et comportant au moins une paroi de recouvrement (4A, 4'A, 4"A) de ladite paroi frontale.

2. Dispositif selon la revendication précédente, **caractérisé en ce que** ledit capot (4, 4', 4") comporte des moyens de circulation d'air entre ledit dispositif de télérelevé (3, 3', 10) et ledit capot.

3. Dispositif selon la revendication précédente, **caractérisé en ce que** ladite circulation d'air est naturelle.

4. Dispositif selon l'une des revendications précédentes, **caractérisé en ce que** ladite paroi de recouvrement (4A, 4'A, 4"A) est espacée de ladite paroi frontale (3A, 3'A, 10A), le capot étant disposé sur le dispositif.

5. Dispositif selon la revendication précédente, **caractérisé en ce que** ledit capot comporte des orifices (4C, 4'C, 4"C) dans ladite paroi de recouvrement.

6. Dispositif selon l'une des revendications précédentes, **caractérisé en ce que** ledit capot comporte également un rebord périphérique (4B, 4'B, 4"B).

7. Dispositif selon la revendication précédente, **caractérisé en ce que** ledit rebord (4B, 4"B) recouvre au moins partiellement la paroi latérale (3B, 10B) dudit dispositif de télérelevé.

8. Dispositif selon la revendication précédente, **caractérisé en ce que** ledit rebord (4B, 4"B) est espacé de ladite paroi latérale (3B, 10B) du dispositif de télérelevé, le capot étant disposé sur le dispositif.

9. Dispositif selon la revendication 6, **caractérisé en ce que** ledit rebord périphérique (4'B) coopère avec une bride périphérique (3'D) dirigée vers l'extérieur, portée par le dispositif (3'), le capot (4') étant disposé sur le dispositif.

10. Dispositif selon l'une des revendications précédentes, **caractérisé en ce que** ledit capot (4, 4") est solidaire du dispositif de télérelevé.

11. Dispositif selon la revendication précédente, **caractérisé en ce que** ledit capot (4, 4") est clippé sur le dispositif de télérelevé.

12. Dispositif selon l'une des revendications 1 à 9, **caractérisé en ce que** ledit capot (4") est articulé sur le dispositif de télérelevé, de façon à pouvoir être soulevé.

13. Module de télérelevé (3, 3') installé sur un compteur selon l'une des revendications précédentes.

14. Relais de télétransmission (10) selon l'une des revendications 1 à 12.

## Revendications modifiées

### Revendications modifiées conformément à la règle 137(2) CBE.

**1.** Dispositif de télérelevé (3, 3', 10) destiné au relevé à distance de la consommation d'un compteur et comprenant un boîtier avec une paroi frontale (3A, 3'A, 10A) et une paroi latérale (3B, 3'B, 10B), **caractérisé en ce qu'**il comprend également un capot de protection du rayonnement solaire (4, 4', 4") spécifique, disposé sur le boîtier du dispositif de télérelevé et comportant au moins une paroi de recouvrement (4A, 4'A, 4"A) de ladite paroi frontale, ce capot étant solidaire du boîtier du dispositif de télérelevé.

**2.** Dispositif selon la revendication précédente, **caractérisé en ce que** ledit capot (4, 4', 4") comporte des moyens de circulation d'air entre ledit dispositif de télérelevé (3, 3', 10) et ledit capot.

**3.** Dispositif selon la revendication précédente, **caractérisé en ce que** ladite circulation d'air est naturelle.

**4.** Dispositif selon l'une des revendications précédentes, **caractérisé en ce que** ladite paroi de recouvrement (4A, 4'A, 4"A) est espacée de ladite paroi frontale (3A, 3'A, 10A), le capot étant disposé sur le dispositif.

**5.** Dispositif selon la revendication précédente, **caractérisé en ce que** ledit capot comporte des orifices (4C, 4'C, 4"C) dans ladite paroi de recouvrement.

**6.** Dispositif selon l'une des revendications précédentes, **caractérisé en ce que** ledit capot comporte également un rebord périphérique (4B, 4'B, 4"B).

**7.** Dispositif selon la revendication précédente, **caractérisé en ce que** ledit rebord (4B, 4"B) recouvre au moins partiellement la paroi latérale (3B, 10B) dudit dispositif de télérelevé.

**8.** Dispositif selon la revendication précédente, **caractérisé en ce que** ledit rebord (4B, 4"B) est espacé de ladite paroi latérale (3B, 10B) du dispositif de télérelevé, le capot étant disposé sur le dispositif.

**9.** Dispositif selon la revendication 6, **caractérisé en ce que** ledit rebord périphérique (4'B) coopère avec une bride périphérique (3'D) dirigée vers l'extérieur, portée par le dispositif (3'), le capot (4') étant disposé sur le dispositif.

**10.** Dispositif selon l'une des revendications précédentes, **caractérisé en ce que** ledit capot (4, 4") est solidaire du dispositif de télérelevé.

**11.** Dispositif selon la revendication précédente, **caractérisé en ce que** ledit capot (4, 4") est clippé sur le dispositif de télérelevé.

**12.** Dispositif selon l'une des revendications 1 à 9, **caractérisé en ce que** ledit capot (4") est articulé sur le dispositif de télérelevé, de façon à pouvoir être soulevé.

**13.** Module de télérelevé (3, 3') installé sur un compteur selon l'une des revendications précédentes.

**14.** Relais de télétransmission (10) selon l'une des revendications 1 à 12.
